# EUROPÄISCHE PATENTSCHRIFT

(11) **EP 3 387 632 B1**
(45) Veröffentlichungstag und Bekanntmachung des Hinweises auf die Patenterteilung: **06.01.2021**
(21) Anmeldenummer: 16797542.4
(22) Anmeldetag: 16.11.2016
(51) Int. Cl.: G08G 1/01, G08G 1/0967, G08G 1/0962, G01C 21/36, G08G 1/16, B60W 30/18

(54) **VERFAHREN ZUR UNTERSTÜTZUNG EINES FAHRERS EINES KRAFTFAHRZEUGS HINSICHTLICH BEVORSTEHENDER ÜBERHOLMANÖVER UND KRAFTFAHRZEUG**
METHOD FOR ASSISTING A DRIVER OF A MOTOR VEHICLE WITH RESPECT TO AN EMINENT OVERTAKING MANEUVER, AND MOTOR VEHICLE
PROCÉDÉ POUR ASSISTER LE CONDUCTEUR D'UN VÉHICULE AUTOMOBILE CONCERNANT UNE MANOEUVRE DE DÉPASSEMENT IMMINENTE ET VÉHILCULE AUTOMOBILE

(30) Priorität: 08.12.2015 DE 102015015944
(43) Veröffentlichungstag der Anmeldung: 17.10.2018
(73) Patentinhaber: Audi AG, 85045 Ingolstadt (DE)
(72) Erfinder: PROFENDINER, Daniel, 85049 Ingolstadt (DE); SCHÖN, Torsten, 85111 Pietenfeld (DE)
(86) Internationale Anmeldenummer: PCT/EP2016/077815
(87) Internationale Veröffentlichungsnummer: WO 2017/097555

(56) Entgegenhaltungen:
- EP-A2- 1 045 224
- EP-A2- 1 652 128
- WO-A1-2006/037360
- DE-A1- 10 029 816
- DE-A1- 10 255 331
- DE-A1-102013 013 799

## Beschreibung

Die Erfindung betrifft ein Verfahren zur Unterstützung eines Fahrers eines Kraftfahrzeugs hinsichtlich bevorstehender Überholmanöver mittels eines Fahrerassistenzsystems, wobei streckenabschnittsbezogen eine aus einer Überholinformation ermittelte Überholeignung bezüglich eines Überholmanövers an einen Fahrer ausgegeben wird. Daneben betrifft die Erfindung ein Kraftfahrzeug.

Das Einschätzen von Überholmöglichkeiten bei der Fahrt auf Landstraßen erweist sich häufig als eine sehr schwierige Aufgabe für den Fahrer, der einen Überholvorgang plant. Daher kann es nicht nur vorkommen, dass Fahrer grundsätzlich Überholmanöver scheuen, sondern es ist auch denkbar, dass vom Fahrer Fehlentscheidungen getroffen werden, die zu kritischeren Fahrsituationen, insbesondere abgebrochenen Überholmanövern, führen können. Insbesondere fehlt dem Fahrer eines Kraftfahrzeugs bei ihm unbekannten Strecken jegliches Wissen, welche Streckenabschnitte sich zum Überholen besonders eignen. Mithin kann es vorkommen, dass riskantere Überholmanöver durchgeführt werden, obwohl in nächster Zukunft ein für einen Überholvorgang viel besser geeigneter Streckenabschnitt folgt.

Selbst wenn der Fahrer hier eine Kartendarstellung eines Navigationssystems des Kraftfahrzeugs zur Hilfe nimmt, um beispielsweise eine nächste "lange Gerade" zu erkennen, löst dies die genannten Probleme nicht, denn lange gerade Streckenabschnitte können äußerst hügelig sein, so dass die Sichtweite trotz der geraden Form der Straße beschränkt ist, und langgezogene Kurven können sich trotz der Kurvenform besser zum Überholen eignen, falls neben der Fahrbahn keine Bebauung existiert und die Kurven dadurch gut einsehbar sind.

Im Stand der Technik wurden bereits Fahrerassistenzsysteme vorgeschlagen, die den Fahrer dabei unterstützen sollen, gute Zeitpunkte für Überholmanöver zu wählen. Dabei ist es beispielsweise bekannt, die aktuelle Fahrsituation beschreibende Fahrsituationsdaten, die im Kraftfahrzeug ermittelt wurden, auszuwerten, um eine Überholempfehlung zu generieren. Ferner wurde vorgeschlagen, Überholhinweise bzw. Informationen zur Eignung eines Streckenabschnitts zum Überholen aus einem fahrzeugeigenen Navigationssystem zu ermitteln und auszugeben. So schlägt beispielsweise DE 10 2010 008 071 A1 vor, vor dem Kraftfahrzeug liegende Streckenabschnitte mit für Überholvorgänge relevanten Eigenschaften zu bestimmen und die Informationen über wenigstens einen Streckenabschnitt mit für Überholvorgänge relevante Eigenschaften an den Fahrzeugführer auszugeben. Dabei kann der Zeitpunkt der Ausgabe der Information so gewählt werden, dass der Fahrer rechtzeitig über eine Überholmöglichkeit informiert wird.

Problematisch hierbei ist jedoch, dass auszuwertende Navigationsdaten keine Aussage darüber erlauben, ob ein folgender Streckenabschnitt geeigneter für ein Überholmanöver wäre. Denn es fehlen in digitalen Kartendaten eines Navigationssystems wichtige Informationen zur korrekten Beurteilung von Streckenabschnitten, nachdem letztlich dieselbe Analyse, wie sie durch "Sicht" auf die Karte vom Fahrer vorgenommen würde, automatisiert wird.

DE 100 29 816 A1 betrifft ein Fahrerassistenzsystem zur Unterstützung eines Fahrers eines Kraftfahrzeugs hinsichtlich bevorstehender Überholmanöver, bei dem X-FCD (eXtended Floating Car Data) erfasst werden, um Auskunft über das Verkehrsverhalten der Fahrzeuge geben zu können.

DE 102 55 331 A1 betrifft ein Fahrerinformationssystem zur Information eines Fahrzeugführers über Eigenschaften von Streckenabschnitten einer Fahrtroute, die von einem Fahrzeugstandort in Fahrtrichtung vor dem Fahrzeug liegen, wobei die dortige Idee ist, dass die Eigenschaften der Streckenabschnitte für Überholvorgänge relevante Eigenschaften der Streckenabschnitte umfassen sollen. Somit soll eine frühzeitige Information eines Fahrzeugführers über auf seiner Fahrstrecke liegende Überholmöglichkeiten gegeben sein.

Der Erfindung liegt daher die Aufgabe zugrunde, eine verbesserte Informationsgrundlage für ein Fahrerassistenzsystem zur Überholmanöverunterstützung zu schaffen.

Zur Lösung dieser Aufgabe sind bei einem Verfahren der eingangs genannten Art erfindungsgemäß die Merkmale des Anspruchs 1 vorgesehen.

Erfindungsgemäß wird mithin vorgeschlagen, innerhalb der Kraftfahrzeuge einer Flotte selbst, also der Datenaufnahmekraftfahrzeuge, während den Fahrten dieser Kraftfahrzeuge realitätsnahe, nützliche Informationen zu sammeln, die in Form der Streckendaten an eine zentrale Recheneinrichtung, insbesondere einen Server, übermittelt werden, dort zentral gesammelt werden und zur Ermittlung äußerst genauer und realistischer Überholinformationen, nämlich eines Überholeignungswerts für einzelne Streckenabschnitte, verwendet werden können. Dabei kann insbesondere vorgesehen sein, dass als Datenaufnahmekraftfahrzeuge alle ein Fahrerassistenzsystem zur Unterstützung eines Fahrers eines Kraftfahrzeugs hinsichtlich bevorstehender Überholmanöver aufweisenden Kraftfahrzeuge verwendet werden und/oder die Datenaufnahmekraftfahrzeuge alle ein Fahrerassistenzsystem zur Unterstützung des Fahrers des Kraftfahrzeugs hinsichtlich bevorstehender Überholmanöver aufweisen. Mit anderen Worten kann die Nutzung als Datenaufnahmekraftfahrzeug und das Vorhandensein eines Fahrerassistenzsystems zur Überholmanöverunterstützung aneinander gekoppelt werden; es sind jedoch auch Ausführungsbeispiele denkbar, in denen auch Kraftfahrzeuge, die selbst nicht mit einem derartigen Fahrerassistenzsystem ausgestattet sind, Streckendaten sammeln, wenn die entsprechende Ausrüstung zur Aufnahme der Streckendaten in dem Datenaufnahmekraftfahrzeug vorhanden ist. Beispielsweise können als Datenaufnahmekraftfahrzeuge sämtliche die geeignete Datenaufnahmeausrüstung aufweisenden Kraftfahrzeuge eines Herstellers eingesetzt werden oder dergleichen.

Die Streckendaten enthalten dabei selbstverständlich eine Information, die ihre Zuordnung zu Streckenabschnitten erlaubt, wobei beispielsweise vorgesehen sein kann, dass die Streckendaten eine aktuelle Position des Datenaufnahmekraftfahrzeugs, beispielsweise eine über einen GPS-Sensor bestimmte Position, umfassend übermittelt werden. Eine besonders zweckmäßige Weiterbildung der vorliegenden Erfindung sieht zudem vor, dass die Streckendaten zudem eine Fahrtrichtung umfassend übermittelt werden, wobei vorzugsweise die Überholinformation fahrtrichtungsbezogen ermittelt wird. Dem liegt die Erkenntnis zugrunde, dass häufig Überholbedingungen in unterschiedlichen Fahrtrichtungen unterschiedlich sein können.

Insgesamt kann also gesagt werden, dass Streckendaten auf der zentralen Recheneinrichtung, die auch als Backend bezeichnet werden kann, den entsprechenden Streckenabschnitten zugeordnet werden. Werden nun die Streckendaten für bestimmte Streckenabschnitte, die von unterschiedlichen Datenaufnahmekraftfahrzeugen stammen, statistisch ausgewertet, entsteht eine Information über die Überholeignung, da die Streckendaten ja die Bewertung der Überholeignung auf dem Streckenabschnitt erlauben. Vorgesehen ist, dass zu den verschiedenen Streckenabschnitten ein Überholeignungswert als Überholinformation ermittelt wird. Beispielsweise lassen sich derartige Überholinformationen besonders einfach in digitalen Kartendaten abspeichern, so dass eine bevorzugte Ausgestaltung der vorliegenden Erfindung vorsieht, dass die Überholinformation in digitalen Kartendaten eines Navigationssystems des Kraftfahrzeugs den Streckenabschnitten zugeordnet abgespeichert wird. Zweckmäßig ist dies insbesondere, wenn die verschiedenen Strecken in den digitalen Kartendaten ohnehin bereits in Streckenabschnitte unterteilt sind, wobei selbstverständlich auch eine andere/weitere Unterteilung vorgenommen werden kann, die dennoch als Zuordnung in digitalen Kartendaten abgespeichert werden kann, beispielsweise als Zusatzattribut einer im digitalen Kartenmaterial definierten Streckenlänge eine Unterteilung der Streckenlänge in Streckenabschnitte.

Bei jeder Aktualisierung und/oder regelmäßig werden die aktuellen Überholinformationen an Kraftfahrzeuge mit einem Fahrerassistenzsystem zur Unterstützung des Fahrers hinsichtlich bevorstehender Überholmanöver übertragen, so dass sie dort entsprechend genutzt werden können. Letztendlich liegt dann im Kraftfahrzeug ein Streckenprofil vor, auf dessen Basis beispielsweise eine Empfehlung für den Fahrer ausgegeben werden kann.

Auf diese Art und Weise wird insgesamt die Sicherheit bei Überholvorgängen erhöht und die Unfallgefahr reduziert. Durch die ermöglichte, verbesserte Unterstützung durch das Fahrerassistenzsystem fühlt sich der Fahrer mit der Umgebung vertraut und sicherer. Dies führt insbesondere auch zur Reduzierung von Stress und somit zur Reduzierung der Anzahl riskant durchgeführter Überholmanöver.

Es sei an dieser Stelle noch angemerkt, dass die Überholinformation neben einer Nutzung im Fahrerassistenzsystem auch anderweitig eingesetzt werden kann, beispielsweise zur Analyse hinsichtlich sinnvoller, neuer behördlicher Überholverbote und dergleichen.

Eine Ausgestaltung des erfindungsgemäßen Verfahrens sieht vor, dass als Streckendaten eine die Sichtreichweite von auf das Vorfeld gerichteten Umgebungssensoren der Datenaufnahmekraftfahrzeuge entlang der Strecke beschreibende Sichtreichweiteninformation aus Sensordaten der Umgebungssensoren ermittelt wird. Es wird mithin überprüft, wieweit die Strecke durch insbesondere optische bzw. eine direkte Sichtverbindung benötigende Umgebungssensoren des Kraftfahrzeugs erfasst, mithin eingesehen werden kann, was ein Maß für die Einsehbarkeit auch durch den Fahrer darstellt, der die Strecke, insbesondere die Gegenspur, für einen Überholvorgang einschätzen möchte. Als Umgebungssensoren werden dabei bevorzugt optische Sensoren, beispielsweise Kameras, herangezogen; denkbar ist es jedoch auch, die Sensordaten von Radarsensoren, Laserscannern und dergleichen als Umgebungssensoren heranzuziehen und hinsichtlich der Sichtreichweite auszuwerten.

Dabei sind verschiedene Ausgestaltungen denkbar, um die Sichtreichweite aus den Sensordaten abzuleiten und mithin die Sichtreichweiteninformation zu bestimmen. Im Rahmen der vorliegenden Erfindung kann vorgesehen sein, dass die Sichtreichweiteninformation unter Berücksichtigung eines Sensordaten von mehreren Umgebungssensoren fusionierenden Umfeldmodells und/oder in Abhängigkeit eines weitest entfernt sichtbaren Objekts und/oder in Abhängigkeit einer maximalen Entfernung, in die der Streckenverlauf, insbesondere hinsichtlich der Gegenspur, aus den Sensordaten ableitbar ist, ermittelt wird. Es ist grundsätzlich zweckmäßig, eine Sensordatenfusion zu nutzen, um durch Umgebungssensoren detektierte Merkmale insgesamt korrekt zuordnen zu können. Wesentlich für die Fragestellung der Überholeignung ist letztlich die Einsehbarkeit des Streckenverlaufs, insbesondere der Gegenspur, bei Befahren der Strecke. Mithin wird es letztlich auch bevorzugt, eine maximale Entfernung, in die der Streckenverlauf, konkret die Gegenspur, aus den Sensordaten ableitbar ist, heranzuziehen. Dabei können letztlich beliebig komplexe Auswertungsalgorithmen eingesetzt werden, beispielsweise auch solche, die die Erkennbarkeit des Straßenverlaufs bzw. Gegenspurverlaufs nicht nur auf der Erkennbarkeit des entsprechenden Straßenbelags basieren, sondern auch auf höher aufragenden Objekten, beispielsweise auf der Gegenfahrspur fahrenden Verkehrsteilnehmern und dergleichen.

Vorzugsweise gilt dabei, dass bei der Ermittlung der Überholinformation eine höhere Sichtreichweite als eine bessere Überholeignung anzeigend ausgewertet wird. Wie bereits dargelegt wurde, deutet eine größere Sichtreichweite der Umgebungssensoren auch auf eine größere Sichtreichweite eines Fahrers bei der Einschätzung der Überholsituation hin.

Das erfindungsgemäße Verfahren sieht vor, dass als Streckendaten während eines Überholmanövers des Datenaufnahmekraftfahrzeugs ermittelte Betriebsdaten des Datenaufnahmekraftfahrzeugs und/oder daraus abgeleitete Manöverdaten ermittelt werden. Diese Ausgestaltung sieht mithin vor, durch die Flotte der Datenaufnahmekraftfahrzeuge Überholmanöver aufzuzeichnen und an das Backend, mithin die zentrale Recheneinrichtung, zu übertragen. So lassen sich beispielsweise Streckenabschnitte ermitteln, an welchen besonders häufig überholt wird. Besonders vorteilhaft ist es in diesem Zusammenhang, wenn Streckendaten sowohl für abgeschlossene als auch für abgebrochene Überholmanöver ermittelt werden. Das bedeutet, auch abgebrochene Überholvorgänge werden aufgezeichnet und als Streckendaten an die zentrale Recheneinrichtung übertragen. Derartige Streckendaten deuten beispielsweise auf besonders kritische Überholpositionen hin, beispielsweise auf einer geraden Straße vor einer Kuppe. Letztlich wird also das Überholverhalten einer Vielzahl von Datenaufnahmekraftfahrzeugen beobachtet, analysiert und zur Ermittlung einer besonders realitätsnahen und zur Unterstützung des Fahrers geeigneten Überholinformationen genutzt.

Konkret kann dabei vorgesehen sein, dass ein abgeschlossenes Überholmanöver durch eine Beschleunigungsphase umfassend einen Spurwechsel, einen weiteren Spurwechsel und einen Fortbetrieb des Kraftfahrzeugs mit höherer Geschwindigkeit als vor dem Überholmanöver und/oder ein abgebrochenes Überholmanöver als eine Beschleunigungsphase mit zumindest angesetztem Spurwechsel, gefolgt von einer starken Bremsphase und Weiterbetrieb des Kraftfahrzeugs mit vergleichbarer Geschwindigkeit wie vor dem Überholmanöver erkannt wird. Besonders deutliche Hinweise zur Erkennung von Überholmanövern allgemein sind auch durch Betrachtung der Betätigung der Fahrtrichtungsanzeiger gegeben. Insbesondere im Kontext zu der Fahrumgebung, insbesondere also bei einer Landstraße mit zwei entgegengesetzt befahrenen Fahrspuren, lassen sich also vorteilhaft Blinkvorgänge berücksichtigen. Beispielsweise kann ein potentielles Überholmanöver dahingehend analysiert werden, ob ein Rechtsblinken auf ein Linksblinken folgt. Bevorzugt werden jedoch auch die bereits erwähnten weiteren Betriebsdaten berücksichtigt und zur Realisierung eines allgemeinen Klassifikators für Überholmanöver, insbesondere aufgeschlüsselt nach abgeschlossenen Überholmanövern und abgebrochenen Überholmanövern, genutzt.

Eine vorteilhafte Weiterbildung in diesem Kontext sieht vor, dass der Überholeignungswert in Abhängigkeit wenigstens einer Auswertungsgröße gewählt aus der Gruppe umfassend relative und/oder absolute Anzahl erfolgreicher und/oder abgebrochener Überholversuche, Maximalgeschwindigkeit während der Überholmanöver und Dauer eines Überholmanövers ermittelt wird. Es kann mithin vorgesehen sein, dass für Streckenabschnitte die Anzahl der nicht erfolgreichen Überholversuche und die Anzahl der erfolgreich abgeschlossenen Überholmanöver berücksichtigt werden, da sich, insbesondere bei Betrachtung der relativen Anzahlen, deutliche Hinweise auf die Überholeignung des Streckenabschnitts ergeben. Auch die Maximalgeschwindigkeit bei den Überholvorgängen und/oder die Dauer der Überholvorgänge, insbesondere jeweils gemittelt betrachtet, beschreibt letztlich die Überholgüte pro Streckenabschnitt. Einzelne Auswertungsgrößen können unterschiedlich gewichtet in einen Überholeignungswert eingehen. Ferner sei darauf hingewiesen, dass auch allgemein bei der statistischen Betrachtung von Streckendaten diesen zugeordnete Verlässlichkeitswerte, beispielsweise abgeschätzte Fehler, berücksichtigt werden können, um manche Streckendaten stärker zu gewichten und dergleichen.

Zur Ausgabe der Überholinformation existieren mehrere Möglichkeiten. So ist es beispielsweise denkbar, dass die Überholinformation in einer Kartendarstellung angezeigt wird, insbesondere durch Einfärbung von Streckenabschnitten gemäß eines Überholeignungswerts. Dabei kann vorgesehen sein, dass Streckenabschnitte, deren Überholeignungswert einen ersten Schwellwert übersteigt, grün, Streckenabschnitte, deren Überholeignungswert einen zweiten Schwellwert unterschreitet, rot und Streckenabschnitte mit sonstigen Überholeignungswerten gelb dargestellt werden. Damit ist ein Dreifarbschema (rot, gelb, grün) realisiert, dass die Wiedergabe der Überholeignung in der Karte erlaubt. Der Fahrer kann nun eigenverantwortlich die Überholsituation beurteilen und auf dieser Basis verbessert entscheiden, wann er überholen soll.

Zusätzlich oder alternativ kann auch vorgesehen sein, dass aus aktuellen Betriebsdaten des Kraftfahrzeugs eine Überholwahrscheinlichkeit ermittelt wird und in Abhängigkeit der Überholwahrscheinlichkeit eine Überholempfehlung auf einem bestimmten Streckenabschnitt ausgegeben wird. Fährt beispielsweise ein Fahrer auf einer unübersichtlichen Strecke, auf der 100 km/h erlaubt sind, wird aber erkannt, beispielsweise aus Daten eines längsführenden Fahrerassistenzsystems und/oder der gefahrenen Geschwindigkeit, dass der Fahrer einem langsameren Verkehrsteilnehmer mit einer geringeren Geschwindigkeit folgt, beispielsweise einer Geschwindigkeit von 70 km/h, ist eine hohe Wahrscheinlichkeit für einen gewollten Überholvorgang gegeben. Mithin besteht das Risiko, dass der Fahrer zu überholen versucht, obwohl die Straße in diesem Streckenabschnitt schwer einsehbar ist. Ist aufgrund der Überholinformation jedoch bekannt, dass beispielsweise zwei Kurven später eine lange, gut einsehbare Gerade kommt, auf welcher sicher überholt werden kann, kann beispielsweise ein entsprechender Hinweis an den Fahrer ausgegeben werden: "In 200 m folgt ein gerader Streckenabschnitt, der ein sicheres Überholen erlaubt". Dabei sei an dieser Stelle darauf hingewiesen, dass Algorithmen zur Ermittlung einer Überholwahrscheinlichkeit bzw. einer Überholabsicht im Stand der Technik bereits grundsätzlich bekannt sind, beispielsweise hinsichtlich der Beurteilung von Spurwechseln auf Autobahnen und dergleichen, welche im erfindungsgemäßen Verfahren entsprechend eingesetzt werden können.

Schließlich ist es auch denkbar, dass bei einer erkannten Überholabsicht auf einem eher ungeeigneten, einem geeigneteren Streckenabschnitt vorausgehenden Streckenabschnitt eine Überholwarnung ausgegeben wird, insbesondere enthaltend einen Verweis auf den folgenden, geeigneteren Streckenabschnitt. Ist das Kraftfahrzeug also beispielsweise an einer besonders gefährlichen Stelle unterwegs, beispielsweise auf einem Streckenabschnitt mit vielen abgebrochenen Überholmanövern, kann bei erkannter Überholabsicht (oder auch generell) auch eine Warnung ausgegeben werden, beispielsweise "Achtung, gefährliche Straßensituation, hier nicht überholen". Diese Ausgabe kann ergänzt werden um eine Information, wann ein geeigneterer Streckenabschnitt zum Überholen erreicht wird.

Selbstverständlich sind auch andere Möglichkeiten denkbar, dem Fahrer das über die Überholinformation vorhandenes Wissen geeignet zu vermitteln.

Neben dem Verfahren betrifft die Erfindung auch ein Kraftfahrzeug mit den Merkmalen des Anspruchs 10.

Auf Kraftfahrzeuge bezogene Ausführungen bezüglich des erfindungsgemäßen Verfahrens lassen sich selbstverständlich analog auf das erfindungsgemäße Kraftfahrzeug übertragen. Dieses ist mithin ausgestattet, um sowohl als Datenaufnahmekraftfahrzeug zu dienen, zum anderen aber auch seitens der zentralen Recheneinrichtung ermittelte Überholinformationen zur verbesserten Unterstützung des Fahrers zu nutzen. Beide Funktionalitäten sind vorteilhaft im Steuergerät des Fahrerassistenzsystems realisiert. Die drahtlose Kommunikationsverbindung zu der zentralen Recheneinrichtung kann dabei insbesondere über ein Mobilfunknetz und/oder das Internet hergestellt werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan eines Ausführungsbeispiels zur Ermittlung von Überholinformationen,
- Fig. 2: ein System zur Durchführung des erfindungsgemäßen Verfahrens, und
- Fig. 3: eine Kartendarstellung von Überholinformationen.

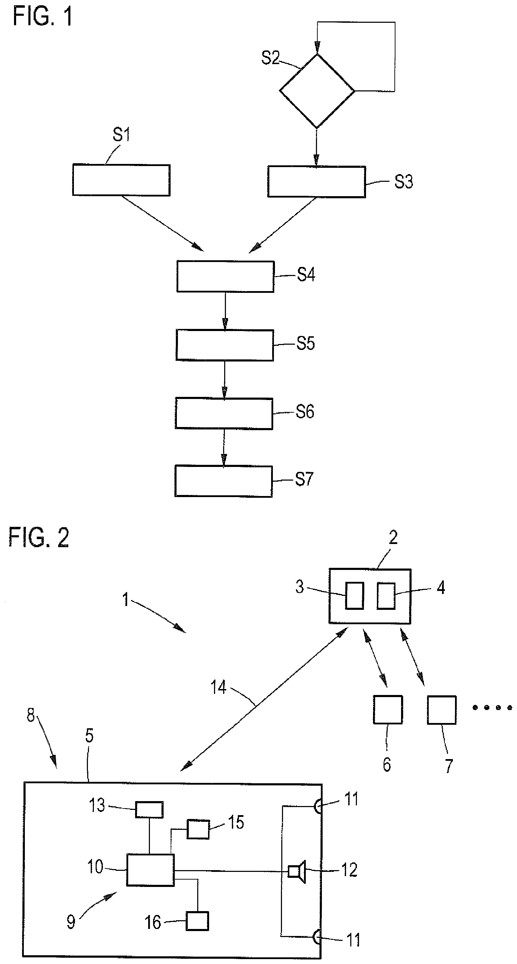

Fig. 1 zeigt ein Ausführungsbeispiel des erfindungsgemäßen Verfahrens in Form eines Ablaufplans. Dabei symbolisieren die Schritte S1, S2 und S3 Schritte zur Ermittlung von Streckendaten, die eine Beurteilung der Überholeignung eines Streckenabschnitts erlauben, innerhalb eines Datenaufnahmekraftfahrzeugs. Dabei werden vorliegend zwei Arten von Streckendaten bei Fahrten des Datenaufnahmekraftfahrzeugs gewonnen. Gemäß dem Schritt S1 werden als Streckendaten kontinuierlich, zyklisch und/oder bei einem bestimmten Aufnahmekriterium die Sichtreichweite von auf das Vorfeld des Datenaufnahmekraftfahrzeugs gerichteten Umgebungssensoren des Datenaufnahmekraftfahrzeugs entlang der Strecke beschreibende Sichtreichweiteninformationen aus Sensordaten der Umgebungssensoren abgeleitet. Hierzu wird insbesondere eine Sensordatenfunktion in ein Umfeldmodell genutzt, um festzustellen, wieweit durch die Umgebungssensoren der Streckenverlauf der befahrenen Strecke hinsichtlich wenigstens der Gegenspur erkennbar und somit einsehbar ist. Bei Verwendung eines Umfeldmodells sind hierfür zu treffende Vorauswertungen, um dies beurteilen zu können, meist ohnehin schon erfolgt, wobei selbstverständlich sichergestellt werden muss, dass Informationen über den weiteren Verlauf der Fahrbahn auch durch die Sensordaten beschrieben bzw. beschreibbar sind und nicht allein aus anderen Quellen, digitalen Kartendaten, abgeleitet sind. Verschiedene Ausgestaltungen konkreter Auswertungsalgorithmen sind denkbar.

In einem Schritt S2 werden aktuelle Betriebsdaten des Datenaufnahmekraftfahrzeugs dahingehend überprüft, ob diese das Vorliegen eines (abgeschlossenen oder abgebrochenen) Überholmanövers anzeigen. Neben der Fahrumgebung werden insbesondere die Betätigungssignale eines Fahrtrichtungsanzeigers (Linksblinken gefolgt von Rechtsblinken) berücksichtigt, zusätzlich jedoch auch das Führungsverhalten des Fahrers, mithin, ob eine Beschleunigungsphase mit einem Spurwechsel von einem weiteren Spurwechsel und einem Betrieb des Kraftfahrzeugs bei einer höheren Geschwindigkeit gefolgt ist (abgeschlossenes Überholmanöver) bzw. ob eine Beschleunigungsphase mit wenigstens einem angesetzten Spurwechsel von einer stärkeren Bremsphase und einem Weiterbetrieb des Kraftfahrzeugs im Wesentlichen bei der vorherigen Geschwindigkeit gefolgt ist (abgebrochenes Überholmanöver). Wird in einem Schritt S2 das Vorliegen eines Überholmanövers festgestellt, werden in einem Schritt S3 als Streckendaten dieses Überholmanöver beschreibende Streckendaten zusammengestellt, wobei in einem einfachen Fall die Klassifizierung als erfolgreiches oder nicht erfolgreiches Überholmanöver als Streckendaten ausreichend sein kann, bevorzugt jedoch auch weitere Informationen, beispielsweise bezüglich der Geschwindigkeit und der zurückgelegten Weglänge, als Streckendaten in einem entsprechenden Streckendatensatz zusammengefasst werden.

Die in den Schritten S1 bis S3 gesammelten Streckendaten werden gemeinsam mit einer aktuellen Position des Datenaufnahmekraftfahrzeugs bei der Aufnahme der Streckendaten, die eine Zuordnung zu einem Streckenabschnitt erlaubt, und einer Fahrtrichtungsangabe über die Fahrtrichtung des Kraftfahrzeugs bei der Aufnahme der Streckendaten an eine zentrale, kraftfahrzeugexterne Recheneinrichtung übermittelt. Dies geschieht in einem Schritt S4.

In einem Schritt S5 werden die gesammelten Streckendaten einer Mehrzahl von Datenaufnahmekraftfahrzeugen, nach Streckenabschnitten sortiert, statistisch ausgewertet. Hinsichtlich der Betriebsdaten bei Überholmanövern betreffenden Streckendaten werden insbesondere die absoluten und relativen Anzahlen von erfolgreich abgeschlossenen und abgebrochenen Überholmanövern genauso als Auswertungsgrößen bestimmt wie die mittlere, maximale Geschwindigkeit bei abgeschlossenen Überholmanövern und die mittlere Dauer von abgeschlossenen Überholmanövern. Diese Auswertungsgrößen werden gemeinsam mit der statistischen Sichtreichweiteninformation, gegebenenfalls gewichtet, zu einem Überholeignungswert für den Streckenabschnitt zusammengefasst. Der Überholeignungswert ist idealerweise normiert, beispielsweise auf ein bestimmtes Intervall beschränkt, in dem hohe Werte für eine hohe Überholeignung, niedrige Werte für eine niedrige Überholeignung stehen.

Ermittelte, Streckenabschnitten zugeordnete Überholeignungswerte werden in einem Schritt S6, beispielsweise nach jeder Aktualisierung und/oder zyklisch und/oder auf Anfrage, an Kraftfahrzeuge mit einem Fahrerassistenzsystem zur Unterstützung des Fahrers bei einem Überholmanöver übertragen. Dort werden sie in einem Schritt S7 entsprechend genutzt.

Besonders zweckmäßig ist es in diesem Zusammenhang, wenn die Überholeignungswerte den Streckenabschnitten zugeordnet digitalen Kartendaten eines Navigationssystems hinzugefügt werden bzw. bei einer Aktualisierung bereits dort befindliche Überholinformationen ersetzen. Dort lassen sich die Überholinformationen besonders einfach abrufen. Die Überholinformationen werden verwendet, um unterstützende Ausgaben für den Fahrer, insbesondere Überholempfehlungen und/oder Überholwarnungen, auszugeben, worauf im Folgenden noch näher eingegangen werden wird.

Fig. 2 zeigt ein System 1, in dem das erfindungsgemäße Verfahren realisiert werden kann. Das System 1 umfasst die bereits erwähnte zentrale Recheneinrichtung 2 (Backend), welche eine Speichereinrichtung 3 für eingegangene Streckendaten und eine Auswertungseinheit 4 zur statistischen Auswertung der Streckendaten umfasst. Die zentrale Recheneinrichtung 2 kommuniziert mit einer Flotte von Datenaufnahmekraftfahrzeugen, von denen hier nur beispielhaft Datenaufnahmekraftfahrzeuge 5, 6 und 7 schematisch angedeutet sind.

Das Datenaufnahmekraftfahrzeug 5, bei dem es sich im Übrigen um ein erfindungsgemäßes Kraftfahrzeug 8 handelt, ist beispielhaft genauer dargestellt. Es weist ein Fahrerassistenzsystem 9 zur Unterstützung des Fahrers hinsichtlich bevorstehender Überholmanöver auf. Dem Fahrerassistenzsystem 9 ist ein Steuergerät 10 zugeordnet, welches sowohl die Ermittlung und Übermittlung von Streckendaten als auch die Unterstützungsfunktionen realisiert. Zur Aufnahme von Streckendaten ist das Steuergerät 10 mit einer Vielzahl von Fahrzeugsystemen verbunden, um Betriebsdaten des Kraftfahrzeugs 8 (hinsichtlich Überholmanövern) ermitteln zu können bzw. gegebenenfalls vorausgewertete Sensordaten von Umgebungssensoren zu erhalten, was die Bestimmung einer Sichtreichweiteninformation angeht. Rein beispielhaft sind als Umgebungssensoren Radarsensoren 11 und eine Kamera 12 gezeigt.

Über eine Kommunikationseinrichtung 13 kann eine Kommunikationsverbindung 14 zu der Recheneinrichtung 2 aufgebaut werden, sowohl, um Streckendaten an die Recheneinrichtung 2 zu übertragen, als auch um Überholinformationen von der Recheneinrichtung 2 zu erhalten. Die Überholinformationen können Streckenabschnitten zugeordnet in digitalen Kartendaten eines Navigationssystems 15 des Kraftfahrzeugs abgespeichert werden.

Das Steuergerät 10 kommuniziert ferner mit wenigstens einem Ausgabemittel 16, beispielsweise einer Anzeigeeinrichtung und/oder einer akustischen Ausgabeeinrichtung, um streckenabschnittsbezogen Überholeignungen, insbesondere Überholempfehlungen und/oder Überholwarnungen, ausgeben zu können.

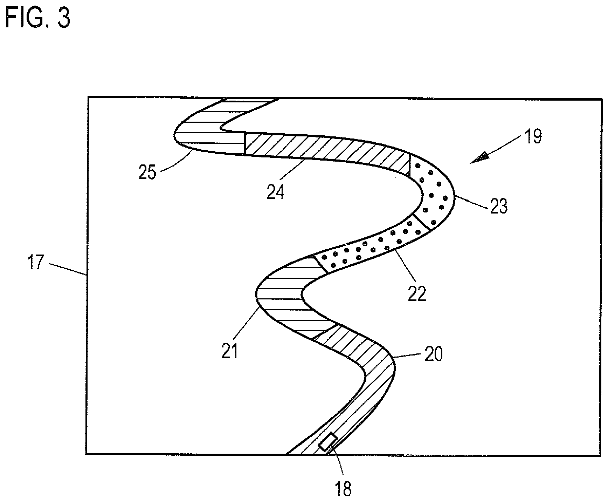

Eine Möglichkeit zur optischen Ausgabe von einen Überholeignungswert umfassenden Überholinformationen ist durch Fig. 3 erläutert. Dort ist eine Kartendarstellung 17 gezeigt, die eine aktuelle Position eines Kraftfahrzeugs 18 auf der aktuell befahrenen Strecke mit einem vorausliegenden Streckenanteil 19 zeigt. Der Streckenanteil 19 ist ersichtlich in Streckenabschnitte 20 bis 25 unterteilt, die in verschiedenen Farben, hier durch verschiedene Schraffuren angedeutet, wiedergegeben werden, welche die Überholeignung vermitteln. Überschreitet der Überholeignungswert einen ersten Schwellwert, liegt eine hohe Überholeignung vor, so dass die entsprechenden Streckenabschnitte, hier die Streckenabschnitte 20 und 24, in grün dargestellt werden. Der Streckenabschnitt 20 bietet eine nicht versperrte Aussicht auf die Gegenspur trotz der Kurve; der Streckenabschnitt 24 verläuft eben und gerade und bietet ebenso gute Einsicht in die Gegenspur.

Liegt der Überholeignungswert in einem Intervall zwischen dem ersten und einem zweiten, niedrigeren Schwellwert, ist eine mittlere Überholeignung gegeben, so dass die entsprechenden Streckenabschnitte, hier die Streckenabschnitte 22 und 23, in gelb dargestellt werden. Zwar verläuft der Streckenabschnitt 22 gerade, jedoch liegen Kuppen vor, die die Sicht auf die Gegenspur erschweren.

Unterschreitet der Überholeignungswert den zweiten Schwellwert, ist der Streckenabschnitt besonders schlecht zu Überholen geeignet, so dass er in rot dargestellt wird, hier die Streckenabschnitte 21 und 25, die vorliegend aufgrund von Kurven und von verdeckter Sichten ungünstig sind. Insbesondere könnten hier viele abgebrochene Überholmanöver aufgezeichnet worden sein.

Es sind selbstverständlich auch andere Ausgabevarianten denkbar, beispielsweise die Ausgabe von Warnungen bei erkannter Überholabsicht in einem eher ungeeigneten Streckenabschnitt bzw. Hinweise darauf, wann wieder ein besonders geeigneter Streckenabschnitt für das Überholen erreicht wird

## Patentansprüche

1. Verfahren zur Unterstützung eines Fahrers eines Kraftfahrzeugs (8) hinsichtlich bevorstehender Überholmanöver mittels eines Fahrerassistenzsystems (9), wobei streckenabschnittsbezogen eine aus einer Überholinformation ermittelte Überholeignung bezüglich eines Überholmanövers an einen Fahrer ausgegeben wird,
**dadurch gekennzeichnet,**
**dass** zur Ermittlung der Überholinformation:
- seitens einer Mehrzahl von Datenaufnahmekraftfahrzeugen (5, 6, 7) bei einer Fahrt entlang einer Strecke wenigstens teilweise auf Streckenabschnitte (20-25) bezogene, die Bewertung der Überholeignung auf einem Streckenabschnitt (20-25) beeinflussende Streckendaten ermittelt und an eine kraftfahrzeugexterne, zentrale Recheneinrichtung (2) übermittelt werden,
- jeweils die einem Streckenabschnitt (20-25) zugeordneten Streckendaten verschiedener Kraftfahrzeuge (5, 6, 7) statistisch zur Ermittlung der auf den Streckenabschnitt (20-25) bezogenen Überholinformation ausgewertet werden, wobei zu den verschiedenen Streckenabschnitten ein Überholeignungswert als Überholinformation ermittelt wird, und
- die Überholinformationen allen ein Fahrerassistenzsystem (9) zur Unterstützung des Fahrers hinsichtlich bevorstehender Überholmanöver aufweisenden Kraftfahrzeugen (8) bereitgestellt werden, wobei die Überholinformationen in digitalen Kartendaten eines Navigationssystems (15) des jeweiligen Kraftfahrzeugs (8) den Streckenabschnitten (20-25) zugeordnet abgespeichert werden,
wobei als Streckendaten während eines Überholmanövers des Datenaufnahmekraftfahrzeugs (5, 6, 7) ermittelte Betriebsdaten des Datenaufnahmekraftfahrzeugs (5, 6, 7) und/oder daraus abgeleitete Manöverdaten ermittelt werden.

2. Verfahren nach Anspruch 1,
**dadurch gekennzeichnet,**
**dass** als Streckendaten eine die Sichtreichweite von auf das Vorfeld gerichteten Umgebungssensoren der Datenaufnahmekraftfahrzeuge (5, 6, 7) entlang der Strecke beschreibende Sichtreichweiteninformation aus Sensordaten der Umgebungssensoren ermittelt wird.

3. Verfahren nach Anspruch 2,
**dadurch gekennzeichnet,**
**dass** die Sichtreichweiteninformation unter Berücksichtigung eines Sensordaten von mehreren Umgebungssensoren fusionierenden Umfeldmodells und/oder in Abhängigkeit eines weitest entfernt sichtbaren Objekts und/oder in Abhängigkeit einer maximalen Entfernung, in die der Streckenverlauf aus den Sensordaten ableitbar ist, ermittelt wird.

4. Verfahren nach Anspruch 2 oder 3,
**dadurch gekennzeichnet,**
**dass** bei der Ermittlung der Überholinformation eine höhere Sichtreichweite als eine bessere Überholeignung anzeigend ausgewertet wird.

5. Verfahren nach einem der vorangehenden Ansprüche,
**dadurch gekennzeichnet,**
**dass** Streckendaten sowohl für abgeschlossene als auch für abgebrochene Überholmanöver ermittelt werden.

6. Verfahren nach einem der vorangehenden Ansprüche,
**dadurch gekennzeichnet,**
**dass** zur Erkennung eines Überholmanövers wenigstens ein Klassifikator auf die zuletzt zurückgelegte Trajektorie beschreibende Betriebsdaten, umfassend auch Geschwindigkeits- und Beschleunigungsdaten, angewendet wird.

7. Verfahren nach einem der vorangehenden Ansprüche,
**dadurch gekennzeichnet,**
**dass** der Überholeignungswert in Abhängigkeit wenigstens einer Auswertungsgröße gewählt aus der Gruppe umfassend relative und/oder absolute Anzahl erfolgreicher und/oder abgebrochener Überholversuche, Maximalgeschwindigkeit während der Überholmanöver und Dauer eines Überholmanövers ermittelt wird.

8. Verfahren nach einem der vorangehenden Ansprüche,
**dadurch gekennzeichnet,**
**dass** die Streckendaten eine aktuelle Position des Datenaufnahmekraftfahrzeugs (5, 6, 7) und/oder eine Fahrtrichtung umfassend übermittelt werden und/oder die Überholinformation fahrtrichtungsbezogen ermittelt wird.

9. Verfahren nach einem der vorangehenden Ansprüche,
**dadurch gekennzeichnet,**
**dass** die Überholinformation in einer Kartendarstellung (17) angezeigt wird und/oder aus aktuellen Betriebsdaten des Kraftfahrzeugs (6) eine Überholwahrscheinlichkeit ermittelt wird und in Abhängigkeit der Überholwahrscheinlichkeit eine Überholempfehlung auf einem bestimmten Streckenabschnitt (20-25) ausgegeben wird und/oder bei einer erkannten Überholabsicht auf einem eher ungeeigneten, einem geeigneteren Streckenabschnitt (20-25) vorausgehenden Streckenabschnitt (20-25) eine Überholwarnung ausgegeben wird.

10. Kraftfahrzeug (8), aufweisend eine Kommunikationseinrichtung zur Kommunikation mit einer kraftfahrzeugexternen, zentralen Recheneinrichtung (2) und ein Fahrerassistenzsystem (9) zur Unterstützung eines Fahrers des Kraftfahrzeugs (8) hinsichtlich bevorstehender Überholmanöver mit einem Steuergerät (10), welches ausgebildet ist, streckenabschnittsbezogen eine aus einer von der Recheneinrichtung (2) empfangenen, durch statistische Auswertung aus Streckendaten ermittelte Überholinformation, die zu den verschiedenen Streckenabschnitten einen Überholeignungswert umfasst, ermittelte Überholeignung bezüglich eines Überholmanövers an einen Fahrer auszugeben,
**dadurch gekennzeichnet,**
**dass** es ferner ausgebildet ist, bei einer Fahrt entlang einer Strecke wenigstens teilweise auf Streckenabschnitte (20-25) bezogene, die Bewertung der Überholeignung auf einem Streckenabschnitt (20-25) beeinflussende Streckendaten zu ermitteln und an die Recheneinrichtung (2) zu übermitteln, wobei als Streckendaten während eines Überholmanövers des Datenaufnahmekraftfahrzeugs (5, 6, 7) ermittelte Betriebsdaten des Datenaufnahmekraftfahrzeugs (5, 6, 7) und/oder daraus abgeleitete Manöverdaten ermittelt werden.

## Claims

1. Method for assisting a driver of a motor vehicle (8) with respect to an imminent overtaking manoeuvre by means of a driver assistance system (9), wherein an overtaking suitability determined from overtaking information is output to a driver in relation to a route section,
**characterised in**
**that** in order to determine the overtaking information:
- route data related at least partially to route sections (20-25) and influencing the evaluation of the overtaking suitability on a route section (20-25) are determined on the part of a plurality of data recording motor vehicles (5, 6, 7) during a journey along a route and are transmitted to a central computing device (2) external to the motor vehicle,
- in each case the route data of different motor vehicles (5, 6, 7) assigned to a route section (20-25) are statistically evaluated in order to determine the overtaking information related to the route section (20-25), wherein an overtaking suitability value is determined as overtaking information for the different route sections, and
- the overtaking information is provided to all motor vehicles (8) having a driver assistance system (9) for assisting the driver with respect to imminent overtaking manoeuvres, wherein the overtaking information assigned to the route sections (20-25) is stored in digital map data of a navigation system (15) of the respective motor vehicle (8),
wherein operating data of the data recording motor vehicle (5, 6, 7) determined as route data during an overtaking manoeuvre of the data recording motor vehicle (5, 6, 7) and/or manoeuvring data derived therefrom are determined.

2. Method according to claim 1,
**characterised in**
**that** visual range information describing the visual range from the sensor data of the environment sensors of the data recording motor vehicles (5, 6, 7) directed towards the apron along the route is determined as route data.

3. Method according to claim 2,
**characterised in**
**that** the visual range information is determined taking into consideration an environment model merging sensor data of a plurality of environment sensors and/or as a function of an object visible furthest away and/or as a function of a maximum distance, in which the course of the route can be derived from the sensor data.

4. Method according to claim 2 or 3,
**characterised in**
**that** when the overtaking information is determined, a higher visual range is evaluated as indicating a better overtaking suitability.

5. Method according to any one of the preceding claims,
**characterised in**
**that** the route data are determined both for completed as well as for aborted overtaking manoeuvres.

6. Method according to any one of the preceding claims,
**characterised in**
**that** to detect an overtaking manoeuvre at least one classifier is used for the operating data describing the last trajectory covered, comprising also speed and acceleration data.

7. Method according to any one of the preceding claims,
**characterised in**
**that** the overtaking suitability value is determined as a function of at least one evaluation variable selected from the group comprising relative and/or absolute number of successful and/or aborted overtaking attempts, maximum speed during the overtaking manoeuvre and duration of an overtaking manoeuvre.

8. Method according to any one of the preceding claims,
**characterised in**
**that** the route data comprising a current position of the data recording motor vehicle (5, 6, 7) and/or a direction of travel are transmitted and/or the overtaking information is determined in relation to the direction of travel.

9. Method according to any one of the preceding claims,
**characterised in**
**that** the overtaking information is displayed in a map representation (17) and/or an overtaking probability is determined from the current operating data of the motor vehicle (6) and as a function of the overtaking probability an overtaking recommendation on a specific route section (20-25) is output and/or an overtaking warning is output in the event of a recognised overtaking intention on a rather unsuitable route section (20-25) prior to a more suitable route section (20-25).

10. Motor vehicle (8) having a communication device for communicating with a central computing device (2) external to the motor vehicle and a driver assistance system (9) for assisting a driver of the motor vehicle (8) with respect to an imminent overtaking manoeuvre with a control device (10), which is designed to output in relation to a route section an overtaking suitability with respect to an overtaking manoeuvre to a driver received from the computing device (2), determined by statistical evaluation of route data, which comprises an overtaking suitability value for the different route sections,
**characterised in**
**that** it is furthermore designed to determine route data in the event of a journey along a route related at least partially to route sections (20-25), influencing the evaluation of the overtaking suitability on a route section (20-25) and to transmit said data to the computing device (2), wherein operating data of the data recording motor vehicle (5, 6, 7) determined as route data during an overtaking manoeuvre of the data recording motor vehicle (5, 6, 7) and/or manoeuvring data derived therefrom are determined.

## Revendications

1. Procédé pour assister un conducteur d'un véhicule automobile (8) concernant des manœuvres de dépassement imminentes au moyen d'un système d'assistance au conducteur (9), dans lequel une aptitude au dépassement concernant une manœuvre de dépassement qui est déterminée à partir d'une information de dépassement est délivrée à un conducteur sur la base d'un tronçon de parcours,
**caractérisé en ce que**,
pour déterminer l'information de dépassement :
- de la part d'une pluralité de véhicules automobiles d'enregistrement de données (5, 6, 7) lors d'un trajet le long d'un parcours, les données de parcours qui sont au moins partiellement liées à des tronçons de parcours (20-25) et qui influencent l'évaluation de l'aptitude au dépassement sur un tronçon de parcours (20-25) sont déterminées et transmises à un dispositif informatique central (2) externe au véhicule automobile,
- respectivement, les données de parcours de différents véhicules automobiles (5, 6, 7) affectés à un tronçon de parcours (20-25) sont évaluées statistiquement pour déterminer l'information de dépassement relative au tronçon de parcours (20-25), dans lequel une valeur d'aptitude au dépassement est déterminée comme information de dépassement pour les différents tronçons de parcours, et
- les informations de dépassement sont mises à la disposition de tous les véhicules automobiles (8) présentant un système d'assistance au conducteur (9) pour assister le conducteur concernant des manœuvres de dépassement imminentes, dans lequel les informations de dépassement sont stockées dans des données cartographiques numériques d'un système de navigation (15) du véhicule automobile (8) respectif affecté aux tronçons de route (20-25),
dans lequel des données de fonctionnement du véhicule d'enregistrement des données (5, 6, 7) déterminées lors d'une manœuvre de dépassement du véhicule automobile d'enregistrement de données (5, 6, 7) et/ou des données de manœuvre qui en sont dérivées sont déterminées comme des données de parcours.

2. Procédé selon la revendication 1,
**caractérisé en ce**
**qu'**une information de plage de visibilité décrivant la plage de visibilité des capteurs d'environnement des véhicules d'enregistrement de données (5, 6, 7) dirigés vers l'avant le long du parcours est déterminée comme données de parcours à partir de données de capteur des capteurs d'environnement.

3. Procédé selon la revendication 2,
**caractérisé en ce**
**que** l'information de plage de visibilité est déterminée en tenant compte de données de capteur de plusieurs capteurs d'environnement fusionnant un modèle d'environnement et/ou en fonction d'un objet visible le plus éloigné et/ou en fonction d'un éloignement maximal à partir duquel le parcours peut être déduit des données de capteur.

4. Procédé selon la revendication 2 ou 3,
**caractérisé en ce**
**qu'**en déterminant l'information de dépassement, une plage de visibilité plus élevée est évaluée comme indiquant une meilleure aptitude au dépassement.

5. Procédé selon l'une quelconque des revendications précédentes,
**caractérisé en ce**
**que** les données de parcours sont déterminées à la fois pour les manœuvres de dépassement réussies et interrompues.

6. Procédé selon l'une quelconque des revendications précédentes,
**caractérisé en ce**
**que**, pour détecter une manœuvre de dépassement, au moins un classificateur est appliqué aux données de fonctionnement décrivant la dernière trajectoire parcourue, comprenant également des données de vitesse et d'accélération.

7. Procédé selon l'une quelconque des revendications précédentes,
**caractérisé en ce**
**que** la valeur d'aptitude au dépassement est déterminée en fonction d'au moins une grandeur d'évaluation sélectionnée à partir du groupe comprenant le nombre relatif et/ou absolu de tentatives de dépassement réussies et/ou interrompues, la vitesse maximale pendant la manœuvre de dépassement et la durée d'une manœuvre de dépassement.

8. Procédé selon l'une quelconque des revendications précédentes,
**caractérisé en ce**
**que** les données de parcours comprenant une position actuelle du véhicule automobile d'enregistrement de données (5, 6, 7) et/ou une direction de déplacement sont transmises et/ou l'information de dépassement est déterminée selon la direction de déplacement.

9. Procédé selon l'une quelconque des revendications précédentes,
caractérisé en ce
l'information de dépassement est affichée dans un affichage cartographique (17) et/ou une probabilité de dépassement est déterminée à partir de données de fonctionnement actuelles du véhicule automobile (6) et, en fonction de la probabilité de dépassement, une recommandation de dépassement est émise sur un certain tronçon de parcours (20-25) et/ou un avertissement de dépassement est émis lorsqu'une intention de dépasser est détectée sur un tronçon de parcours (20-25) plutôt inapproprié précédant un tronçon de parcours (20-25) plus approprié.

10. Véhicule automobile (8) présentant un dispositif de communication pour la communication avec un dispositif informatique central (2) externe au véhicule automobile et un système d'assistance au conducteur (9) pour assister un conducteur du véhicule automobile (8) concernant des manœuvres de dépassement imminentes avec un dispositif de commande (10) qui est conçu pour fournir au conducteur, selon le tronçon de parcours, une aptitude au dépassement concernant une manœuvre de dépassement déterminée à partir de l'information de dépassement reçue par le dispositif informatique (2) et déterminée par une évaluation statistique à partir de données de parcours et qui comprend une valeur d'aptitude au dépassement pour les différents tronçons de parcours,
**caractérisé en ce**
**qu'**il est en outre conçu pour déterminer, lors d'un trajet sur un parcours, des données de parcours concernant au moins partiellement des tronçons de parcours (20-25) et influençant l'évaluation de l'aptitude au dépassement sur un tronçon de parcours (20-25) et pour les transmettre au dispositif informatique (2), dans lequel des données de fonctionnement du véhicule d'enregistrement des données (5, 6, 7) déterminées lors d'une manœuvre de dépassement du véhicule automobile d'enregistrement de données (5, 6, 7) et/ou des données de manœuvre qui en sont dérivées sont déterminées comme des données de parcours.
